# EUROPEAN PATENT APPLICATION

(11) **EP 4 663 961 A1**
(43) Date of publication of application: **17.12.2025**
(21) Application number: 24181285.8
(22) Date of filing: 11.06.2024
(51) Int. Cl.: F16B 5/04, F16B 19/08

(54) **SELF-PIERCING RIVET FOR HIGH STRENGTH ALUMINIUM APPLICATIONS**

(71) Applicant: Newfrey LLC, New Britain, CT 06053 (US)
(72) Inventor: STOCK, Maximilian, 35394 Gießen (DE); BARTIG, Paul, 35394 Gießen (DE); WISSLING, Matthias, 35394 Gießen (DE)
(74) Representative: SBD IPAdmin

(57) **Abstract**

Self-piercing rivet joint and self-piercing rivet 10) for producing a joining connection between at least two components (C1, C2, C3) comprising:
a. a rivet head (12), a rivet free end and a rivet shank (14) extending between the rivet head and the rivet free end, the rivet shank (14) having a central shank bore (16) comprising a base (17),
b. the rivet shank (14) comprises a cylindrical shank outer surface and a cylindrical shank inner surface (18) limiting the central shank bore,
the rivet free end comprises an annular piercing end (22) facing away from the rivet head,
c. the shank outer surface (20) has a first diameter (Ds), the central shank bore comprises a bore depth (T) between the base (17) of the central shank bore and the annular piercing end,
wherein the rivet shank has a constant radial thickness (ts) and in cross-section a rivet shank surface which is at least 15.5 mm² and a rivet length (L) from the annular piercing end up to the top surface of the rivet head of at least 7 mm.

## Description

The present disclosure relates to a self-piercing rivet, in particular a semi-hollow self-piercing rivet, for the production of a joining connection between at least two components. The self-piercing rivet is used in particular to produce a joining connection between components or layers made of high strength aluminium having a particular thickness. High strength aluminium are for instance characterized by a tensile strength above 470 MPa.

A self-piercing rivet is partially hollow with a head and a cylindrical shank that terminates in an annular edge. As the rivet is driven into at least two overlapping sheets of material over a suitably shaped die, the shank is caused to flare outwardly. The sheets of material are caused to deform around the shank, creating an annulus that encapsulates the shank. The shank and edge of the rivet remain embedded in the sheet material after the rivet has been set. Self-piercing riveting enables sheet material to be joined without the requirement for the pre-drilling or pre-punching of a hole in the material.

The punch riveting as a joining method is widely used in the industry. Especially in the manufacturing of automobiles where light-weight materials, such as aluminium or high-strength steel, magnesium sheets, plastic, carbon fiber reinforced plastic and similar materials, have been adopted for vehicle body panels in the interests of weight reduction and therefore reduced energy consumption. Aluminium is notably difficult or impossible to spot weld, particularly to steel, owing to its high thermal conductivity, low melting range and propensity to form oxide surface films.

For instance, the rivet disclosed in document EP3626982A1 from the applicant allows the joining of several layers of aluminum workpieces notably with a relatively large overall thickness. Relatively large overall thickness is for example a total thickness of the workpiece layers superior to 7 or 8 millimeters. The joining of workpieces with a relatively large overall thickness requires a deep rivet hole (or central shank bore). The current trend towards increasingly high-strength aluminum alloys to fulfill lightweight construction concepts in the automotive industry leads to the fact that the rivet disclosed in document EP3626982A1 sometimes collapses or is unstable during the setting.

In order to overcome this drawback, the hardness of the material of the rivet of EP3626982A1 has been increased. However, this solution is insufficient to guarantee the stability and strength of the rivet joint. Moreover, the setting forces for such joining pose a challenge. Most of the setting devices have maximum force of 80kN and this force is quickly reached when the rivet is fully pressed into such material layers.

There is therefore a need to provide a self-piercing rivet adapted to perform a reliable and stable rivet joint for workpieces with high-strength aluminum alloys having a relatively large overall thickness.

The above-mentioned object is achieved by the self-piercing rivet defined in independent patent claim 1.

More particularly, the self-piercing rivet for producing a joining connection between at least two components comprises a rivet head, a rivet free end and a rivet shank extending between the rivet head and the rivet free end. The rivet shank has a central shank bore comprising a base. The rivet shank comprises a cylindrical shank outer surface and a cylindrical shank inner surface limiting the central shank bore, the rivet free end comprises an annular piercing end facing away from the rivet head. The shank outer surface has a first diameter, the central shank bore comprises a bore depth between the base of the central shank bore and the annular piercing end. The rivet shank has a substantial constant radial thickness and in cross-section a rivet shank surface which is at least 15.5 mm² and a rivet length L from the annular piercing end up to the top of the rivet head of at least 7 mm. It is understood under the expression "substantial constant radial thickness" that, for example, for manufacturing reasons, the central bore may have a slightly reduced diameter at the end of the central shank bore, to allow better demolding of the rivet. For instance, the diameter of the central shank bore may be 0,05mm smaller in the vicinity of the base, than the diameter of the central shank bore in the vicinity of the transition towards the annular piercing end.

Such rivet design prevents a buckling of the rivet leg during the setting, and at the same time, the maximum possible material can be accommodated in the rivet hole (the central shank bore), resulting in reduced setting forces and high joint quality (lower risk of cracking, both in the rivet and in the material on the die side). The minimum surface of 15.5 mm² enables in particular this function of reducing setting forces and lower risk of cracking.

In some embodiments, a ratio of the bore depth to the rivet length L is between 0.83 and 0.92. The self-piercing rivet can be used for relatively large overall thickness and the maximum possible material can be accommodated in the central shank bore.

In some embodiments, the central shank bore has a volume of at least 55 mm³, preferably a volume around 58 mm³ or of at least 58 mm³. The maximum possible material can be accommodated. The central bore volume corresponds to the volume of the central bore between the base and the rivet free end.

In some embodiments, the bore depth is between 7 and 12 mm. Here again, this allows accommodating the maximum possible material.

In some embodiments, the rivet length L is between 8 and 14 mm. Thus, material with overall thickness above 8 mm can be joint.

In some embodiments, the annular piercing end has a radial width between 4% and 16% of the rivet shank radial thickness. This prevents a collapsing of the rivet and limit the setting forces.

In some embodiments, the annular piercing end merges into the shank inner surface by means of a profile which comprises a cutting radius, and wherein the annular piercing end merges into the shank outer surface by means of a shank external bevel.

In some embodiments, the shank external bevel defines at least one of a bevel angle between 35 and 45 degrees. This geometry ensures a well-timed spreading of the rivet after the first layer(s)/workpieces have been punched through during the setting process.

In some embodiments, the rivet head has a volume of less than 40mm³. A particular setting forces increase results from pressing the rivet head into the joining materials or workpieces. A rivet head volume of less than 40 mm³ allows reducing or limiting the setting forces without the rivet head failing in the needed tensile test. The rivet head volume corresponds to the volume of the rivet head between the base and the upper side of the head opposite the base.

In some embodiments, the shank outer surface merges into an external circumference of the head by a second profile, which defines an underhead radius and a head cone. This allows the rivet head to sit flush after its setting.

In some embodiments, the rivet head comprises a head thickness which extends from the head top surface to the base, and a ratio of the head thickness to the rivet length L is between 0.08 and 0.17.

The present disclosure is also directed to a self-piercing rivet joint with at least two workpieces, and notably an upper workpiece and a lower workpiece, wherein at least one of the workpieces is formed from a high-strength aluminium alloy, and with a self-piercing rivet as described above. High strength aluminium alloys are for instance characterized by a tensile strength above 300 MPa, preferably above 470 MPa.

In some embodiments, two or more workpieces are joined by the self-piercing rivet and the overall thickness of the workpieces is at least of 6 mm, preferably of at least 7 mm.

Other characteristics and advantages of the embodiments of the present invention will readily appear from the following description of one of its embodiments, provided as non-limitative examples, and shown in the accompanying drawings.
Fig. 1 shows a longitudinal sectional view through an embodiment of a self-piercing rivet according to the invention;
Fig. 2 shows a view of detail II of Fig. 1;
Fig. 3 shows a longitudinal sectional view through a further embodiment of a self-piercing rivet according to the invention;
Fig. 4 shows a self-piercing rivet joint according to the invention.

On the different figures, the same reference signs designate identical or similar elements.

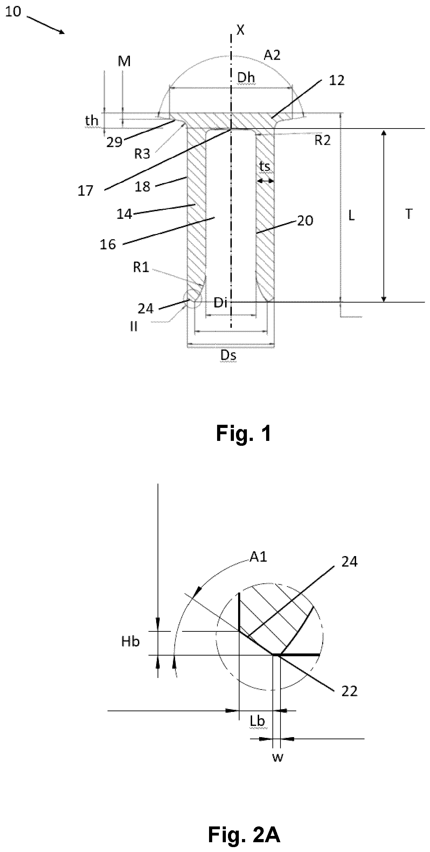

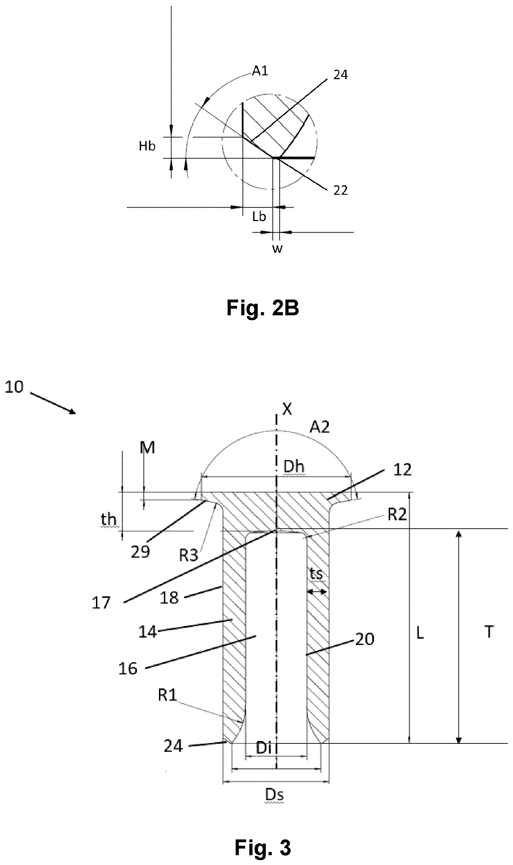

Fig. 1 and Fig. 3 show a self-piercing rivet 10 comprising a rivet head 12 and a rivet shank 14 extending along a longitudinal axis X. The self-piercing rivet 10 is suitable for producing a joining connection between at least two components, such as components made of high strength aluminium alloys.

The rivet shank 14 comprises a central shank bore 16 having a base 17. The rivet shank 14 further comprises a cylindrical shank outer surface 18 and a shank inner surface 20 limiting the central shank bore. The central shank bore has a volume of at least 55 mm³. More particularly, the central bore may have a volume around 58mm³, or of at least 58 mm³.

The shank outer surface has a first diameter Ds, also called outer diameter Ds. The shank inner surface 20 has a second diameter Di, also called inner diameter Di. The rivet shank has a substantially constant radial thickness ts. Thus, in cross section, the rivet shank has a surface which is constant along the longitudinal axis. The surface of the rivet shank in cross-section is at least of 15.5 mm².

The base 17 can be conical or frustoconical. The base 17 can also be rounded, as depicted in Fig. 3 or Fig. 1. The base 17 can be provided with an arcuate transition of radius R2 between the periphery of the base and the shank inner surface. In other words, the base 17 merges into the shank inner surface 20 by means of the arcuate transition of radius R2.

The rivet shank extends between the rivet head 12 and a rivet free end. The rivet free end comprises an annular piercing end 22 facing away from the rivet head 12. The rivet free end is depicted in Fig. 2. The annular piercing end 22 merges into the shank inner surface 20 by means of a profile which comprises a cutting radius R1. The annular piercing end 22 merges into the shank outer surface 18 by means of a shank external bevel 24. The shank external bevel 24 is aligned at a bevel angle A1 between 35 and 45 degrees with reference to a radial plane. The external bevel comprises an axial external bevel height Hb and an external bevel length Lb. The axial external bevel height Hb may be between 0.25 and 0.27mm (+/-0.05mm). The external bevel length Lb may be between 0.3 and 0.37mm (+/-0.05mm). The annular piercing end 22 has a radial width w. The annular piercing end has a radial width between 3% and 10% of the rivet shank radial thickness ts. The self-piercing rivet defines a rivet length L from the annular piercing end up to the top surface of the rivet head which is at least of 7 mm. More particularly, the rivet length L is between 8 and 14 mm.

In another embodiment, the rivet free end comprises an outer portion which is radiused with a radius of curvature being for instance of about 0.3mm. The outer portion connects the shank inner surface 20 by means of a profile which comprises the cutting radius R1. The outer portion forms with the profile having the cutting radius R1 a piercing tip. The outer portion comprises an axial height Hp and an external radial length Lp. The axial height Hp may be of about 0.25 mm and the radial length Lp may be of about 0.3 mm.

The central shank bore 16 comprises a bore depth T between the base 17 of the central shank bore and the annular piercing end. The bore depth T is between 7 and 12 mm. More particularly the bore depth T is the greatest distance along the longitudinal axis X between the base 17 and the annular piercing end 22. For instance, the bore depth T is the distance between the most upper point of the surface of the base (in other words the point of the base situated the nearest of the upper surface of the head) and the most lower point of the annular piercing end 22. A ratio of the bore depth to the rivet length L is between 0.83 and 0.92.

The rivet head 12 comprises a flat head top surface and a cylindrical head external surface. The head top surface comprises a head external diameter Dh. The head external surface comprises a head external surface height M. Inside the shank the head comprises a head bottom surface. The head bottom surface corresponds to the base 17 of the rivet shank. The rivet head 12 comprises a head thickness th which extends from the head top surface to the base. For instance, a ratio of the head thickness to the rivet length L is between 0.08 and 0.17. The rivet head 12 comprises a transition region defined between the cylindrical head external surface and the rivet shank. The transition region has a radius of curvature R3. The radius of curvature R3 forms an underhead radius R3 arranged such that it merges tangentially into both the shank external surface 18 and a conical surface 29 arranged at a head cone angle A2. The rivet head has a volume of less than 40mm³. During the setting, the maximum setting forces are needed to push the rivet head within the material. A small rivet head with a head cone angle of 160° and arivet head volume of less than 40 mm³ allows to limit the necessary setting forces.

The following table shows preferred dimensions and ratio of several embodiments of the self-piercing rivet as disclosed above according to the invention. All given measurements are understood, of course, with usual manufacturing tolerances. For application examples 1 to 7 (Ex. 1 to Ex. 7):

**Table 1:**

| | Ex. 1 | Ex. 2 | Ex. 3 | Ex. 4 | Ex. 5 | Ex. 6 | Ex. 7 |
|---|---|---|---|---|---|---|---|
| Shank outer diameter Ds (mm) | 5.5 | 5.5 | 5.5 | 5.5 | 5.5 | 5.5 | 5.5 |
| Shank inner diameter Di (mm) | 3.15 | 3.15 | 3.15 | 3.15 | 3.15 | 3.15 | 3.15 |
| Rivet length L (mm) | 8 | 11 | 12 | 12 | 13 | 14 | 13.5 |
| radius R2 (mm) | 0.35 | 0.35 | 0.35 | 0.35 | 0.35 | 0.35 | 0.35 |
| cutting radius R1 (mm) | 3 | 3 | 3 | 3 | 3 | 3 | 3 |
| bevel angle A1 | 35° | 35° | 35° | 35° | 35° | 42° | 40° |
| radial width w (mm) | 0.08 | 0.08 | 0.08 | 0.08 | 0.08 | 0.2 | 0.1 |
| head external diameter Dh (mm) | 7.75 | 7.75 | 7.75 | 7.75 | 7.75 | 7.75 | 7.75 |
| head external surface height M (mm) | 0.4 | 0.4 | 0.4 | 0.4 | 0.4 | 0.4 | 0.4 |
| radius of curvature R3 (mm) | 0.5 | 0.5 | 0.5 | 0.5 | 0.5 | 0.5 | 0.5 |
| head cone angle A2 | 160° | 160° | 160° | 160° | 160° | 160° | 160° |
| head thickness th (mm) | 1 | 1 | 1 | 2 | 2 | 2 | 2 |

In addition, it is obvious that the self-piercing rivet can be realized in different length, notably different length between 8 and 14 mm. Such self-piercing rivets may be described as long rivets with increased rivet foot stability and maximum hole volume for joining thick, high-strength high-strength aluminum joints. The particularly large outer cutting edge (bevel 24) prevents premature expansion of the rivet legs. The small head volume allows an overall small rivet volume and reduced setting forces.

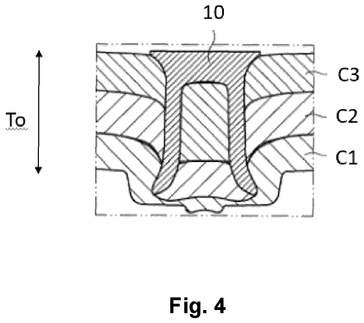

The self-piercing rivet 10 may be used to realize a rivet joint with an upper workpiece C1 and a lower workpiece C3, as depicted in Fig. 4. In Fig. 4 a third workpiece C2 is also shown, but the self-piercing rivet may also be used only with two workpieces or with more than three workpieces. At least one of the workpieces is made of high strength aluminum alloy. The overall thickness To of the workpieces is greater or equal to the rivet length L.

Although exemplary embodiments of the present invention have been shown and described, it will be appreciated by those skilled in the art that changes may be made to these embodiments without departing from the principles and spirit of the invention, the scope of which is defined in the appended claims and their equivalents.

## Claims

1. Self-piercing rivet (10) for producing a joining connection between at least two components (C1, C2, C3) comprising:
a. a rivet head (12), a rivet free end and a rivet shank (14) extending between the rivet head (12) and the rivet free end, the rivet shank (14) having a central shank bore (16) comprising a base (17),
b. the rivet shank (14) comprises a cylindrical shank outer surface (18) and a cylindrical shank inner surface (20) limiting the central shank bore,
the rivet free end comprises an annular piercing end (22) facing away from the rivet head,
c. the shank outer surface (18) has a first diameter (Ds), the central shank bore (16) comprises a bore depth (T) between the base (17) of the central shank bore (16) and the annular piercing end (22),
**characterized in that** the rivet shank (14) has a substantial constant radial thickness (ts) and in cross-section a rivet shank surface which is at least 15.5 mm² and a rivet length (L) from the annular piercing end (22) up to the top surface of the rivet head of at least 7 mm.

2. Self-piercing rivet (10) according to claim 1, wherein a ratio of the bore depth (T) to the rivet length (L) is between 0.83 and 0.92.

3. Self-piercing rivet (10) according to claim 1 or 2, wherein the central shank bore (16) has a volume of at least 55 mm³., preferably of at least 58 mm³.

4. Self-piercing rivet (10) according to any of claims 1 to 3, wherein the bore depth (T) is between 7 and 13 mm.

5. Self-piercing rivet (10) according to any of claims 1 to 4, wherein the rivet length (L) is between 8 and 15 mm.

6. Self-piercing rivet (10) according to any of claims 1 to 5, wherein the annular piercing end (22) has a radial width between 4% and 16% of the rivet shank radial thickness (ts).

7. Self-piercing rivet (10) according to any of claims 1 to 6, wherein the annular piercing end (22) merges into the shank inner surface by means of a profile which comprises a cutting radius (R1), and wherein the annular piercing end (22) merges into the shank outer surface by means of a shank external bevel (24).

8. Self-piercing rivet (10) according to claim 7, wherein the shank external bevel (24) defines at least one of a bevel angle (A1) between 35 and 45 degrees.

9. Self-piercing rivet (10) according to any of claims 1 to 8, wherein the rivet head (12) has a volume of less than 40mm³.

10. Self-piercing rivet (10) according to any of claims 1 to 9, wherein the shank outer surface (18) merges into an external circumference of the head by a second profile, which defines an underhead radius (R3) and a head cone (29).

11. Self-piercing rivet (10) according to any of claims 1 to 10, wherein the rivet head (12) comprises a head thickness (th) which extends from the head top surface to the base, and a ratio of the head thickness to the rivet length (L) is between 0.075 and 0.17.

12. Self-piercing rivet joint with at least an upper workpiece and a lower workpiece, wherein at least one workpiece is formed from a high-strength aluminium alloy, and with a self-piercing rivet (10) according to any of claims 1 to 11.

13. Self-piercing rivet joint according to claim 12, wherein two or more workpieces (C1, C2, C3) are joined by the self-piercing rivet (10) and wherein the overall thickness (To) of the workpieces is at least of 6 mm.
